(19) **Europäisches Patentamt / European Patent Office / Office européen des brevets**

(11) **EP 1 710 963 B1**

(12) **EUROPEAN PATENT SPECIFICATION**

(45) Date of publication and mention
of the grant of the patent:
**07.11.2007 Bulletin 2007/45**

(51) Int Cl.:
***H04L 12/56*** *(2006.01)*

(21) Application number: **06007131.3**

(22) Date of filing: **04.04.2006**

(54) **Method and apparatus for reporting a buffer status using node B-estimated buffer status information in a mobile communication system**

Verfahren und Vorrichtung für das Melden des Status eines Buffers unter Verwendung einer Node B-estimated Buffer Status Information in einem mobilen Kommunikationssystem

Procédé et appareil pour rapporter un état tampon en utilisant un état tampon de type Node B-estimated Buffer Status Information dans un système de communication mobile

(84) Designated Contracting States:
**AT BE BG CH CY CZ DE DK EE ES FI FR GB GR HU IE IS IT LI LT LU LV MC NL PL PT RO SE SI SK TR**

(30) Priority: **04.04.2005 KR 20050028299**

(43) Date of publication of application:
**11.10.2006 Bulletin 2006/41**

(73) Proprietor: **Samsung Electronics Co., Ltd.**
**Yeongtong-gu**
**Suwon-si, Gyeonggi-do (KR)**

(72) Inventors:
• **Kim, Soeng-Hun**
**Yeongtong-gu**
**Suwon-si**
**Gyeonggi-do (KR)**
• **Lee, Kook-Heui**
**Yeongtong-gu**
**Suwon-si**
**Gyeonggi-do (KR)**
• **Jeong, Kyeong-In**
**Yeongtong-gu**
**Suwon-si**
**Gyeonggi-do (KR)**

• **Kwak, No-Jun**
**Yeongtong-gu**
**Suwon-si**
**Gyeonggi-do (KR)**
• **Kwak, Yong-Jun**
**Yeongtong-gu**
**Suwon-si**
**Gyeonggi-do (KR)**

(74) Representative: **Grünecker, Kinkeldey,**
**Stockmair & Schwanhäusser**
**Anwaltssozietät**
**Maximilianstrasse 58**
**80538 München (DE)**

(56) References cited:
**EP-A- 1 509 011**

• **"Feasibility study for enhanced uplink for UTRA FDD (Release 6) 3GPP TR 25.896" 3GPP TR 25.896 V6.0.0, March 2004 (2004-03), page complete, XP002322111**
• **SAMSUNG: "Node B controlled scheduling" 3GPP TSG-RAN WG1 MEETING #38, 16 August 2004 (2004-08-16), XP002367155**

**Description**

The present invention generally relates to a mobile communication system for transmitting packet data through an uplink. More particularly, the present invention relates to a method and apparatus for efficiently scheduling uplink packet transmission in a Node B.

An asynchronous Wideband Code Division Multiple Access (WCDMA) communication system exploits an Enhanced Uplink Dedicated Channel (E-DCH). The E-DCH has been proposed to improve the performance of packet transmission for uplink communication in the asynchronous WCDMA communication system.

A mobile communication system for supporting the E-DCH maximizes efficiency of uplink transmission using a Node B-controlled scheduling technique and a Hybrid Automatic Retransmission Request (HARQ) technique. In the Node B-controlled scheduling technique, a Node B receives information about a channel status, a buffer status, and so on, of User Equipment (UE), and controls uplink transmission of the UE on the basis of the received information. The Node B allows a UE with good channel status to transmit a large amount of data and minimizes data transmission of a UE with bad channel status, thereby accommodating efficient use of limited uplink transmission resources. The HARQ technique executes a HARQ process between a UE and a Node B, thereby increasing the probability of successful transmission at transmission power. Through the HARQ technique, the Node B soft combines a retransmitted data block with a data block in which an error has occurred during transmission without discarding the erroneous data block, thereby increasing the probability of reception of the data block.

Because orthogonality between signals transmitted from a plurality of UE is not maintained in the uplink, the signals act as interference to each other. For this reason, an amount of interference to an uplink signal transmitted from a specific UE increases as the number of uplink signals received by the Node B increases. As the amount of interference to the uplink signal transmitted from the specific UE increases, reception performance of the Node B is degraded. Thus, the Node B limits uplink signals capable of being received while guaranteeing the overall reception performance. Radio resources of the Node B are expressed as shown in Equation (1).

$$ROT = I_0/N_0 \hspace{4cm} \text{Equation (1)}$$

In Equation (1), $I_0$ is the total reception wideband power spectral density of Node B, and $N_0$ is the thermal noise power spectral density of Node B. ROT represents uplink radio resources capable of being allocated by Node B for the E-DCH packet data service.

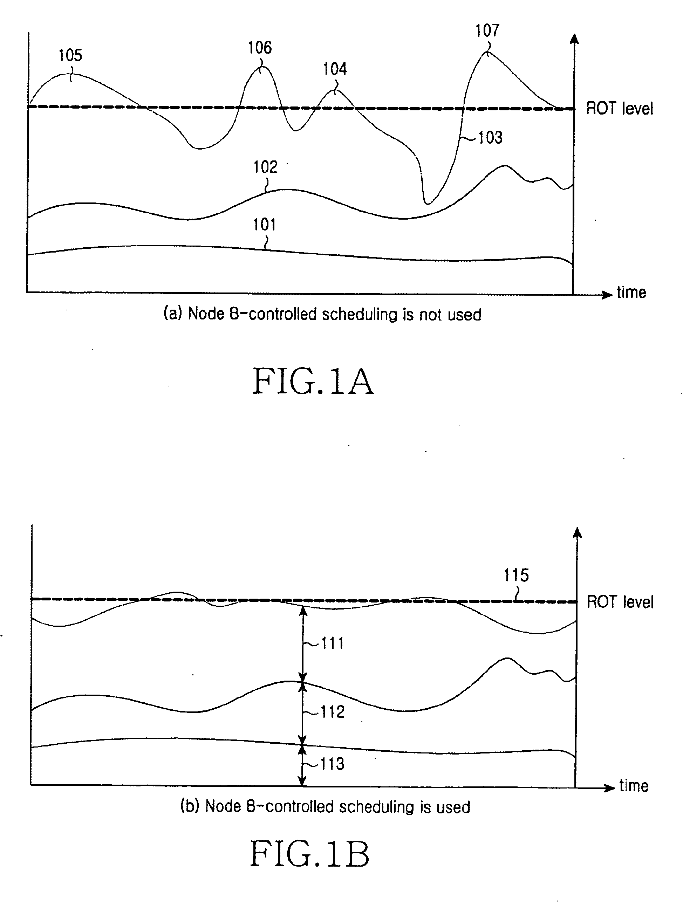

FIGS. 1A and 1B are graphs illustrating variations in uplink radio resources capable of being allocated by Node B. As illustrated in FIGS. 1A and 1B, ROT representing a total of uplink radio resources capable of being allocated by Node B can be expressed as a sum of resources 101 and 113 occupied by Inter-Cell Interference (ICI), resources 102 and 112 occupied by voice traffic and other services, and resources 103 and 111 occupied by E-DCH packet traffic.

FIG. 1A illustrates variations in total ROT when Node B-controlled scheduling is not used. Because scheduling for E-DCH packet traffic is not performed, the level of total ROT can be higher than that of a target ROT 104 (as indicated by reference numerals 105, 106, and 107) when a plurality of UE simultaneously transmit packet data at high data rates. In this case, the uplink reception performance is degraded.

FIG. 1B illustrates variations in total ROT when Node B-controlled scheduling is used. When Node B-controlled scheduling is used, it prevents UE from simultaneously transmitting packet data at high rates. When a high rate is allowed for a specific UE, low rates are allowed for other UE, such that the total ROT does not exceed a target ROT 115.

When the data rate of a specific UE is high, power received from the UE increases in Node B and therefore the ROT for the UE occupies a large portion of the total ROT. In contrast, when the data rate of the UE is low, power received from the UE decreases in Node B and therefore the ROT for the UE occupies a small portion of the total ROT. The Node B schedules the E-DCH packet data by considering the data rate requested from the UE and a relation between data rates and radio resources.

Using information about requested data rates, buffer statuses, and channel statuses of UE using E-DCH, the Node B notifies each UE whether E-DCH data can be transmitted, or performs scheduling to adjust the E-DCH data rate. The Node B-controlled scheduling may be an operation for distributing ROT to the UE on the basis of the channel and buffer statuses of the UE for performing E-DCH communication with Node B.

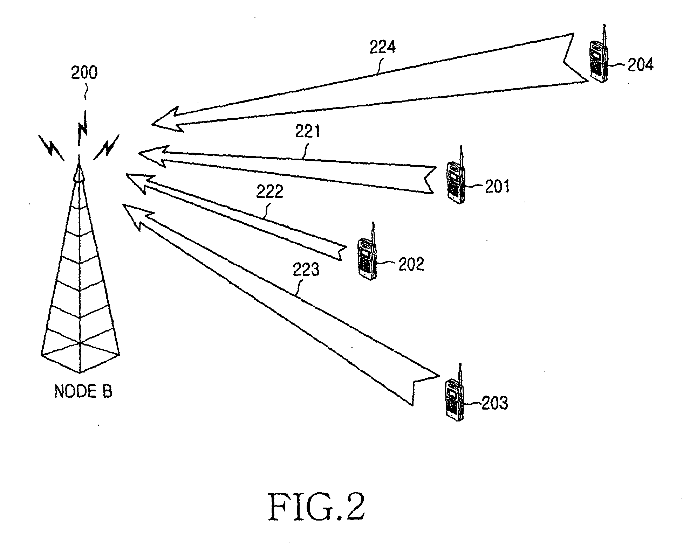

FIG. 2 illustrates a Node B and UE for performing uplink packet transmission. Referring to FIG. 2, the UE 201, 202, 203, and 204 transmit uplink packet data at different uplink channel transmission power levels 221, 222, 223, 224, respectively, according to distances from Node B 200. The UE 204 farthest from Node B 200 transmits packet data at the highest uplink channel transmission power level 224. The UE 202 closest to Node B 200 transmits packet data at the lowest uplink channel transmission power level 222.

Node B 200 can perform scheduling such that the uplink channel transmission power level is in inverse proportion to the data rate in order to improve the performance of the mobile communication system while maintaining the total ROT and reducing ICI to other cells. Thus, Node B 200 allocates a small amount of transmission resources to the UE 204 with the highest uplink channel transmission power, and allocates a large amount of transmission resources to the UE 202 with the lowest uplink channel transmission power, thereby efficiently maintaining the total ROT.

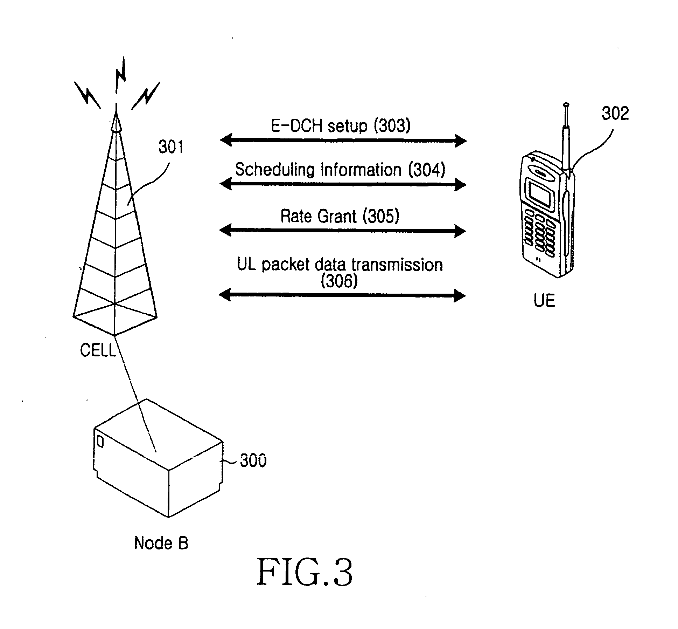

FIG. 3 illustrates an operation in which a Node B allocates transmission resources for E-DCH packet data to a UE, and the UE transmits the packet data using the allocated transmission resources.

Referring to FIG. 3, an E-DCH is set up between a Node B 300, a cell 301, and a UE 302, step 303. The cell 301 provides substantial radio resources, and the Node B 300 controls the cell 301. A plurality of cells can be connected to one Node B 300. Step 303 includes a process for transmitting and receiving messages through a dedicated transport channel. After the E-DCH is set up, the UE 302 transmits necessary transmission resource information and uplink (UL) channel status information to the Node B 300 in step 304. The information can include a transmission power value of an uplink channel transmitted from the UE 302, a transmission power margin of the UE 302, buffer status information of the UE 302, and so on.

Upon receiving the information, Node B 300 compares the uplink channel transmission power with the reception power actually measured and then estimates channel status. That is, the uplink channel status is determined to be good when the difference between the uplink channel transmission power and the uplink channel reception power is small, but the uplink channel status is determined to be bad when the difference between the transmission power and the reception power is large. When the UE 302 transmits the transmission power margin such that the uplink channel status is estimated, Node B 300 estimates the uplink transmission power by subtracting the transmission power margin from the maximum transmission power available in the UE 302 that is already known. The Node B 300 sets available transmission resources for an uplink packet channel of the UE 302 using information about an estimated channel status for the UE 302 and a buffer status of the UE 302.

In step 305, the UE 302 is notified of rate grant for the set transmission resources. At this time, the transmission resources can be defined by the size of data capable of being transmitted in the uplink, or in the form of a transmission rate or available transmission power.

The UE 302 sets the size of packet data to be actually transmitted with the notified transmission resources, and transmits data of the set size to the Node B 300 in step 306. At this time, a unit of packet data to be transmitted through the E-DCH is referred to as a Media Access Control-enhanced Protocol Data Unit (MAC-e PDU). The packet data is transmitted through Enhanced-Dedicated Physical Data Channel (E-DPDCH) in the MAC-e PDU.

As described above, the conventional Node B performs scheduling on the basis of a Buffer Status Report (BSR) of the UE. However, because the amount of transmission resources available in the BSR is limited, the buffer status reported to the Node B may be different from the actual buffer status of the UE. Thus, there is a problem in that transmission resources can be inefficiently used.

EP 1 509 011 A2 discloses a method performed in a UE of transmitting buffer state information and channel state information CSI for scheduling an uplink packet data service in a mobile communication system. The buffer state information indicates a state of a data buffer for storing packet data to be transmitted from the UE and the CSI indicates an uplink transmit power of the UE. The UE acquires different transmission intervals of the buffer state information and the CSI, initially transmits the buffer state information and the CSI if the amount of packet data stored in the buffer is equal to or greater than a predetermined threshold and periodically transmits the buffer state information and the CSI at the transmission intervals.

"Feasibility study for enhanced uplink for UTRA FDD", 3GPP TR 25.896 V6.0.0, March 2004, relates to uplink transport format combination selection management with RRC signaling. It further provides an overview of techniques considered to support enhanced uplink including node B controlled scheduling.

Samsung, "Node B controlled scheduling", 3GPP TSG-RAN WG+ Meeting #38, 16 August 2004, provides a discussion about issues and recommendations in relation to node B controlled scheduling.

SUMMARY OF THE INVENTION

Accordingly, the present invention has been designed to address the above and other problems occurring in the prior art. Therefore, it is the object of the present invention to provide a method and apparatus that can reduce the waste of transmission resources and the degradation of system performance due to an incorrect buffer status report in a mobile communication system for supporting uplink packet transmission.

This object is solved by the subject matter of the independent claims. Preferred embodiments are defined in the dependent claims.

Moreover, exemplary embodiments of the present invention provide a method and apparatus that can reduce inefficiency due to the difference between the value of an actual buffer status of the User Equipment (UE) and the value of a buffer status report transmitted from the UE.

Moreover, exemplary embodiments of the present invention provide a method and apparatus that can minimize the difference between a Node B-estimated buffer status and an actual buffer status by transmitting a new buffer status report from the User Equipment (UE) when the difference between the estimated buffer status and the actual buffer status is present.

In accordance with an aspect of exemplary embodiments of the present invention, there is provided a method for reporting Buffer Status (BS) using Node B-estimated BS information in a mobile communication system, comprising monitoring a Node B-estimated BS and actual BS of User Equipment (UE). The method further comprises comparing a value of the Node B-estimated BS with a preset first threshold, determining whether a value of the actual BS is more than a preset second threshold if the Node B-estimated BS value is less than the first threshold, and transmitting a Buffer Status Report (BSR) indicative of the actual BS to a Node B if the actual BS value is more than the second threshold.

In accordance with another aspect of exemplary embodiments of the present invention, there is provided a method for reporting Buffer Status (BS) using Node B-estimated BS information in a mobile communication system, comprising monitoring a Node B-estimated BS and actual BS of User Equipment (UE). The method further comprises determining whether a value of the actual BS is more than a preset first threshold, comparing a value of the Node B-estimated BS with a preset second threshold if the actual BS value is less than the first threshold, and transmitting a Buffer Status Report (BSR) indicative of the actual BS to a Node B if the actual BS value is more than the second threshold.

In accordance with another aspect of exemplary embodiments of the present invention, there is provided a method for reporting Buffer Status (BS) using Node B-estimated BS information in a mobile communication system, comprising monitoring a Node B-estimated BS and actual BS of User Equipment (UE). The method further comprises checking a first condition that a value of the Node B-estimated BS is less than a first threshold and a value of the actual BS is more than a second threshold in order to determine whether a new BS is required to be reported, checking a second condition that the actual BS value is less than a third threshold and the Node B-estimated BS is more than a fourth threshold, and transmitting a Buffer Status Report (BSR) indicative of the actual BS to a Node B if at least one of the first and second conditions is satisfied.

In accordance with yet another aspect of exemplary embodiments of the present invention, there is provided an apparatus for reporting Buffer Status (BS) using Node B-estimated BS information in a mobile communication system, comprising a BS monitor for monitoring actual BS of User Equipment (UE), a Buffer Status Report (BSR) controller for managing a Node B-estimated BS, comparing a value of the Node B-estimated BS and a value of the actual BS with at least two thresholds, and determining whether a new BS is required to be reported. The apparatus further comprises a BS reporter for receiving information about the actual BS from the BS monitor when the BSR controller determines that the new BS is required to be reported and generating a BSR message, and a transmitter for transmitting the BSR message generated from the BS reporter to a Node B.

## BRIEF DESCRIPTION OF THE DRAWINGS

The above and other features and aspects of the present invention will be more clearly understood from the following detailed description of certain exemplary embodiments taken in conjunction with the accompanying drawings, in which:

FIG. 1A illustrates variations in uplink radio resources when Node B-controlled scheduling is not used;
FIG. 1B illustrates variations in uplink radio resources when Node B-controlled scheduling is used;
FIG. 2 illustrates a Node B and User Equipment (UE) for performing uplink packet transmission;
FIG. 3 illustrates information transmitted and received between the Node B and the UE for performing uplink packet transmission;
FIG 4 illustrates a structure of a UE;
FIG. 5 illustrates a problem occurring in the prior art;
FIG. 6 schematically illustrates an exemplary embodiment of the present invention;
FIG. 7 is a flowchart illustrating an operation of the UE in accordance with a first exemplary embodiment of the present invention;
FIG. 8 is a flowchart illustrating an operation of the UE in accordance with a second exemplary embodiment of the present invention;
FIX 9 is a flowchart illustrating an operation of the UE in accordance with a third exemplary embodiment of the present invention;
FIG. 10 illustrates a structure of the UE in accordance with the first through third exemplary embodiments of the present invention; and
FIG. 11 illustrates a structure of the Node B in accordance with the first through third exemplary embodiments of the present invention.

Throughout the drawings, like reference numbers should be understood to refer to like elements, features, and structures.

DETAILED DESCRIPTION OF EXEMPLARY EMBODIMENTS

The matters exemplified in this description are provided to assist in a comprehensive understanding of various exemplary embodiments of the present invention disclosed with reference to the accompanying figures. Accordingly, those of ordinary skill in the art will recognize that various changes and modifications of the exemplary embodiments described herein can be made without departing from the scope and spirit of the claimed invention. Descriptions of well-known functions and constructions are omitted for clarity and conciseness.

An aspect of exemplary embodiments of the present invention is to minimize the difference between a Node B-estimated Buffer Status (BS) and actual BS by providing a new Buffer Status Report (BSR) from a User Equipment (UE) when the difference between the estimated BS and the actual BS is present in a mobile communication system for supporting an uplink packet data service. Exemplary embodiments of the present invention will be described with reference to an Enhanced Uplink Dedicated Channel (E-DCH) of Universal Mobile Telecommunication Service (UMTS) serving as one of the third-generation mobile communication services. The present invention is not limited to a specific standard and system. Rather, the present invention can be applied to all possible types of communication systems.

A UMTS Terrestrial Radio Access Network (UTRAN) of a UMTS system is provided with Node Bs configured by a plurality of cells and a Radio Network Controller (RNC) for managing radio resources of the Node Bs and the cells.

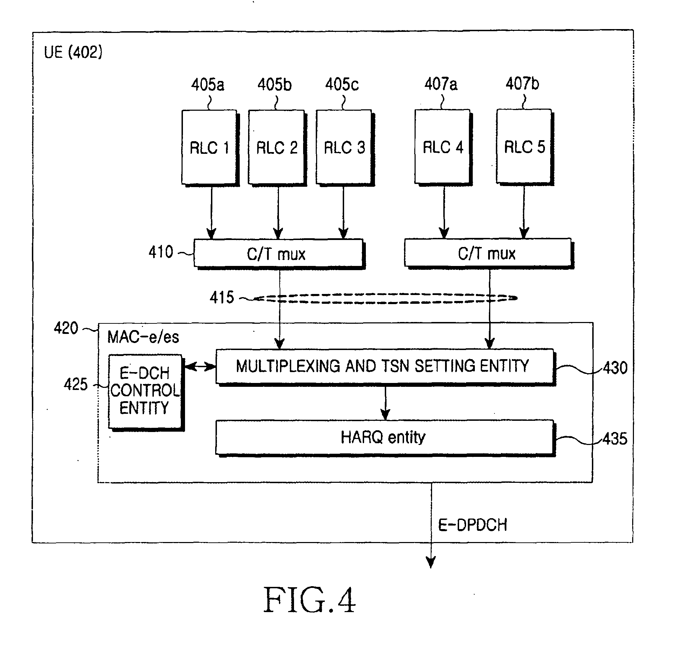

FIG. 4 illustrates a structure of the UE for performing uplink packet transmission through the E-DCH.

Referring to FIG. 4, the UE 402 is provided with Radio Link Control (RLC) layers 405a, 405b, 405c, 407a, and 407b (hereinafter, reference numerals 405a, 405b, and 405c may be referred to as aggregate reference numeral 405, and reference numerals 407a and 407b may be referred to as aggregate reference numeral 407), Control and Traffic Multiplexers (C/T MUXs) 410 for inserting multiplexing information into data transferred from the RLC layers 405 and 407, and a Media Access Control for E-DCH/Serving RNC (MAC-e/es) layer 420.

RLC entities of the RLC layers 405 and 407 are configured on a logical channel-by-logical-channel or radio bearer-by-radio-bearer basis, store data generated from a higher layer in associated buffers, and divide or connect the data generated from the higher layer in a size suitable for transmission from a radio layer. The RLC entities report buffer status to an E-DCH control entity 425 of the MAC-e/es layer 420. For reference, the radio bearers indicate entities of the RLC layers and the higher layer configured to process data of a specific application/service. The logical channels are present between the RLC and MAC layers. One logical channel per radio bearer is provided.

The C/T MUX 410 inserts the multiplexing information into data transferred from the RLC layer 405. The multiplexing information can be an identifier of a logical channel. A receiving side references the identifier and transfers received data to a suitable RLC entity. The C/T MUX 410 is called a MAC-d layer.

A flow of data output from the C/T MUXs 410 is referred to as a MAC-d flow 415. The MAC-d flow 415 is classified according to the Quality of Service (QoS) required by logical channels. A flow of data of logical channels requiring the identical QoS is classified as the identical MAC-d flow. The MAC-e/es layer 420 can provide the specified QoS on a MAC-d flow-by-MAC-d-flow basis. For example, the number of Hybrid Automatic Retransmission Request (HARQ) retransmissions, transmission power, and so on, can be adjusted according to QoS.

The MAC-e/es layer 420 is provided with the E-DCH control entity 425, a multiplexing and Transmission Sequence Number (TSN) setting entity 430, and an HARQ entity 435.

The E-DCH control entity 425 generates E-DCH-related control information. The E-DCH-related control information is information about a BS or uplink transmission power. The information is transmitted in a Media Access Control-enhanced Protocol Data Unit (MAC-e PDU) corresponding to E-DCH packet data in a piggyback manner, such that it can be referred to when the Node B performs scheduling. Hereinafter, the E-DCH-related control information is referred to as the MAC-e control signal.

The E-DCH control entity 425 receives information about an associated BS from the RLC entities 405a, 405b, 405c, 407a, and 407b, generates a BSR on the basis of the received information, and transfers the BSR to the multiplexing and TSN setting entity 430. The BSR is piggybacked in a MAC-e PDU by the multiplexing and TSN setting entity 430 and is transmitted to the Node B through an Enhanced-Dedicated Physical Data Channel (E-DPDCH).

The multiplexing and TSN setting entity 430 inserts multiplexing information and TSN into data transferred from a higher layer, thereby generating a MAC-e PDU. The HARQ entity 435 controls HARQ transmission and retransmission of the MAC-e PDU. The HARQ entity 435 controls the HARQ transmission and retransmission of the MAC-e PDU in response to an Acknowledge (ACK) or Non-Acknowledge (NACK) signal transmitted from a Node B (not illustrated).

When data is generated in the RLC entity, that is, data is transferred from the higher layer of the RLC layer to a buffer of the RLC entity, the RLC entity reports a BS based on the generated data to the E-DCH control entity 425. The E-DCH control entity 425 generates a BSR based on the BS, and transmits the BSR to the Node B at an available time.

A scheduler of the Node B allocates transmission resources suitable for the UE 402 on the basis of the BSR.

The UE 402 to which the transmission resources are allocated computes an amount of data capable of being transmitted by the transmission resources, receives data from the associated RLC entity or entities according to the data amount, generates a MAC-e PDU, and transmits the generated MAC-e PDU to the Node B.

As described above, the E-DCH operates according to the BSR. For example, BS information can be constructed by 5 bits. In this case, the BS of the UE is expressed by 32 codes.

Table 1 shows an example of expressing the BS using 32 codes. A BS code indicates an amount of data stored in the UE at a specific time.

Table 1

| Code | BS | Code | BS |
|---|---|---|---|
| 0 | 100 | 16 | 2472 |
| 1 | 122 | 17 | 3021 |
| 2 | 149 | 18 | 3691 |
| 3 | 182 | 19 | 4510 |
| 4 | 223 | 20 | 5512 |
| 5 | 272 | 21 | 6735 |
| 6 | 333 | 22 | 8230 |
| 7 | 407 | 23 | 10057 |
| 8 | 497 | 24 | 12289 |
| 9 | 608 | 25 | 15017 |
| 10 | 742 | 26 | 18351 |
| 11 | 907 | 27 | 22424 |
| 12 | 1109 | 28 | 27402 |
| 13 | 1355 | 29 | 33484 |
| 14 | 1655 | 30 | 40917 |
| 15 | 2023 | 31 | 50000 |

When the BS is expressed by a limited information size of 5 bits, as shown in Table 1, the difference between actual BS of the UE and a reported BS may inevitably occur.

For example, the UE can only report the BS mapped to 50,000 bytes even when the actual BS of the UE is 100,000 bytes. This means that a difference of 50,000 bytes occurs between the amount of data actually stored in the UE and the amount of stored data of the UE estimated by the Node B. When the BS of the UE is 20,000 bytes and BS Code 27 is used, a difference of 2,424 bytes occurs between the amount of data actually stored in the UE and the amount of stored data of the UE estimated by the Node B.

When the BSR is coded using a limited number of bits, a difference occurs between a BS capable of being detected in the Node B and an actual BS and therefore the efficiency of E-DCH transmission is degraded.

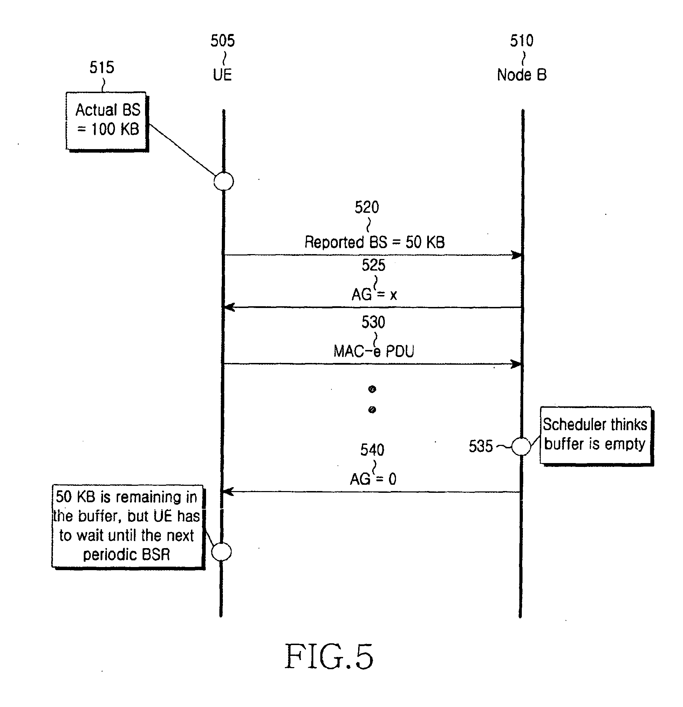

FIG. 5 illustrates a problem in scheduling and BS reporting between a Node B and a UE.

Referring to FIG. 5, data of 100,000 bytes is buffered in the UE 505 in step 515. The UE 505 reports a BS in step 520. At this time, the UE 505 uses a BS code mapped to 50,000 bytes, which corresponds to the value closest to 100,000 bytes.

In step 525, the Node B 510 determines that data of 50,000 bytes is stored in the UE 505 and performs scheduling. In step 530, the UE 505 transmits data according to the Node B-controlled scheduling.

In step 535, the Node B 510 subtracts an amount of data actually received from the UE 505 from an amount of data in the BS reported in step 520, thereby estimating an amount of data currently stored in the UE 505. Upon determining that all data stored in the UE 505 has been transmitted, the Node B 510 sets an Absolute Grant (AG) value to 0 and then sends the AG value of 0 in step 540. The AG value indicates transmission resources allowed for the UE 505.

Data of 50,000 bytes is still present in the UE 505 even when data is not generated after step 515. However, because the AG value is set to 0, the UE 505 reports the BS and can transmit the remaining 50,000 bytes after receiving an allowance for transmission of resources from the Node B 510. If the UE 505 periodically reports the BS, the new BSR is delayed until the next period and therefore significant performance degradation can occur.

Thus, an exemplary embodiment of the present invention minimizes the difference between a Node B-estimated BS and an actual BS by providing a new BSR from a UE when the difference between the estimated BS and the actual BS is present.

For example, when the Node B-estimated BS is close to 0 but the actual BS has a value of more than 0, the UE sends a BSR such that the Node B does not set transmission resources to 0. Alternatively, when the Node B-estimated BS is not 0 but the actual BS is close to 0, the UE sends a BSR such that the Node B does not waste transmission resources.

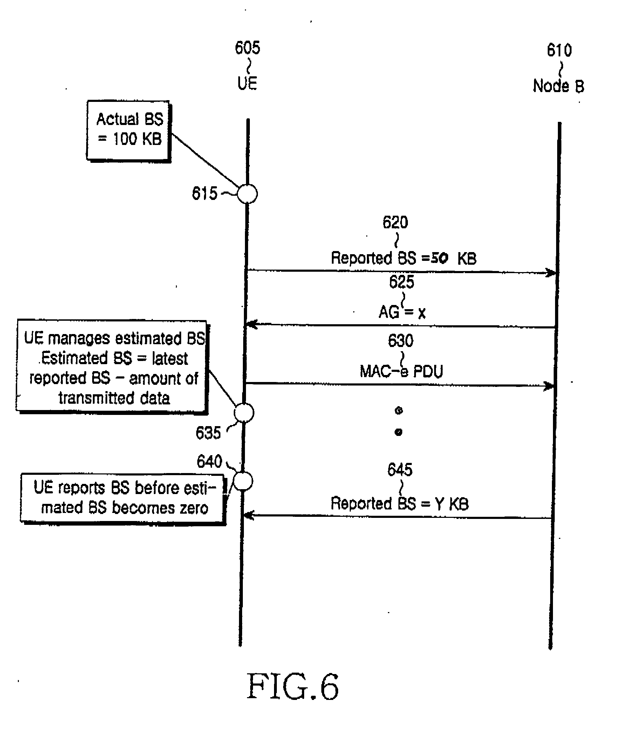

FIG. 6 illustrates scheduling and BS reporting between a Node B and a UE in accordance with an exemplary embodiment of the present invention.

Referring to FIG. 6, data of 100,000 bytes is buffered in the UE 605 in step 615. The UE 605 reports a BS in step 620. At this time, the UE 605 uses a BS code mapped to 50,000 bytes, which corresponds to a value closest to 100,000 bytes.

In step 625, the Node B 610 determines that data of 50,000 bytes is stored in the UE 605 and performs scheduling. In step 630, the UE 605 transmits data according to the Node B-controlled scheduling.

In step 635, the UE 605 performs E-DCH communication and manages a Node B-estimated BS. The estimated BS is a BS expected by the Node B 610. A value of the estimated BS is obtained by subtracting an amount of data transmitted between a BS reporting time and a current time from a value of the latest reported BS as shown in Equation (2).

$$\text{Node B-estimated BS} = \text{Latest reported BS value} - \text{Amount of data}$$

$$\text{transmitted between BS reporting time and current time} \qquad \text{Equation (2)}$$

Therefore, the Node B-estimated BS has an updated value whenever data is transmitted.

Upon determining that the Node B-estimated BS value will soon be set to 0 in step 640, the UE 605 reports a new BS in step 645. If the Node B-estimated BS value will soon be set to 0, it means that the Node B-estimated BS value becomes 0 in the next transmission interval, for example, when the current data transmission rate is considered.

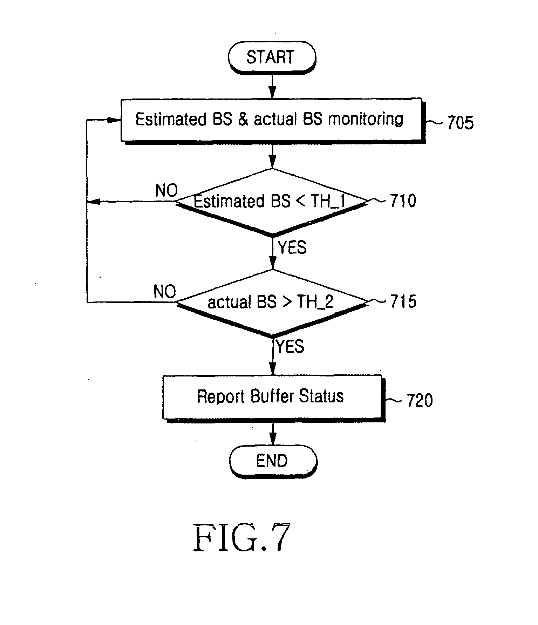

A point of time when the new BS is reported will be described with reference to FIG. 7. As described above, the UE 605 reports the new BS before the Node B 610 estimates the BS value as 0.

FIG. 7 is a flowchart illustrating an operation of the UE in accordance with a first exemplary embodiment of the present invention.

In step 705, the UE continuously monitors a Node B-estimated BS and an actual BS according to Equation (2). The actual BS indicates the sum of data necessary to report the BS among data stored in RLC buffers coupled to the MAC-e/es layer 420 as described with reference to FIG. 4.

For example, when RLC 1 405a is coupled to a real-time voice service and RLC 2 405b and RLC 3 405c are coupled to other packet services, only data of RLC 2 405b and RLC 3 405c may be included in a BSR because a BSR for the real-time voice service may not be generated.

In step 710, the UE compares the Node B-estimated BS with a Threshold 1 (TH_1). TH_1 is a value used to determine whether a new BS is required to be reported when the Node B-estimated BS is considered. TH_1 can be set by various methods. For example, TH_1 can be computed as shown in Equation (3).

$$\text{TH\_1} = \text{Current\_Data\_Rate} * (\text{Estimated Time Required for BSR}$$

$$\text{Transmission} + \text{A}) \qquad \text{Equation (3)}$$

In Equation (3), A is an arbitrary positive integer corresponding to a margin, and Current_Data_Rate is the current transmission rate of the UE.

When the above-described TH_1 is used, a new BSR can be transferred to the Node B before the Node B-estimated BS becomes 0. In accordance with another exemplary embodiment of the present invention, TH_1 is set to an arbitrary constant regardless of the current transmission rate, such that the operation of the UE can be simplified.

If the Node B-estimated BS value is less than TH_1, the UE proceeds to step 715. However, if the Node B-estimated BS value is equal to or more than TH_1, the UE returns to step 705 to continuously monitor the Node B-estimated BS and the actual BS. In step 715, the UE determines whether the value of the actual BS is more than Threshold 2 (TH_2). If the actual BS value is more than TH_2, the UE proceeds to step 720 to report the BS. However, if the actual BS value is less than or equal to TH_2, the UE returns to step 705 to continuously monitor the Node B-estimated BS and the actual BS.

If both the condition of step 710 and the condition of step 715 are satisfied, it means that the Node B-estimated BS will soon become 0 but the actual BS value is more than the estimated BS value. Therefore, the UE reports a new BS and updates the Node B-estimated BS to the actual BS of the UE or a value approximating the actual BS of the UE in step 720.

TH_2 can be set using the following two schemes.

Scheme 1.    TH_2 is set to be equal to TH_1.
Scheme 2.    TH_2 is set to a value that is x more than TH_1.

In the first scheme, a BSR is transmitted when the Node B-estimated BS value is less than TH_1 and the actual BS value is more than the Node B-estimated BS value. In the second scheme, a BSR is transmitted only when the Node B-estimated BS value is less than TH_1 and the actual BS value is x more than the Node B-estimated BS value.

The first scheme may be inefficient because a new BSR is generated even when the actual BS value is a very small value after the Node B-estimated BS becomes 0.

To prevent the above-described inefficiency, x is set to a proper value in the second scheme and TH_2 can be set to a value of more than TH_1.

When the Node B-estimated BS value is close to 0, the UE can determine whether a new BSR is required, on the basis of a difference value between the Node B-estimated BS and the actual BS, such that an unnecessary delay can be prevented.

The first exemplary embodiment defines an efficient operation when the actual BS value of the UE is more than the Node B-estimated BS value.

A second exemplary embodiment proposes an operation of the UE when the actual BS value of the UE is less than the Node B-estimated BS value. The case where the BS value of the UE is less than the Node B-estimated BS value may occur, for example, when data stored in a buffer of the UE is discarded before transmission.

When the actual BS value of the UE is less than the Node B-estimated BS value, the Node B determines that data is present in the UE and then allocates transmission resources. In this case, the allocated transmission resources can be wasted because the UE does not have data. Therefore, the UE checks the Node B-estimated BS when the actual BS value is less than a specific value. The UE reports the BS and notifies the Node B that the actual BS of the UE has been close to 0.

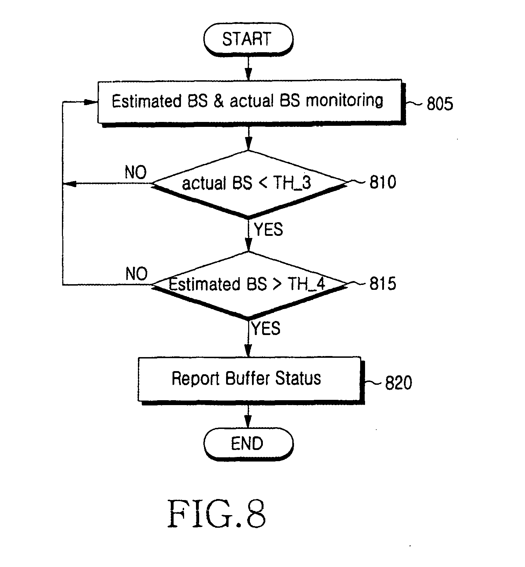

FIG. 8 is a flowchart illustrating an operation of the UE in accordance with a second exemplary embodiment of the present invention.

In step 805, the UE continuously monitors a Node B-estimated BS and an actual BS according to Equation (2). In step 810, the UE compares the value of the actual BS with Threshold 3 (TH_3). TH_3 is a value used to determine whether a new BS is required to be reported when the actual BS of the UE is considered. TH_3 can be set in the same way as TH_1 in the first exemplary embodiment.

If the actual BS value of the UE is less than TH_3, the UE proceeds to step 815. However, if the actual BS value of the UE is equal to or more than TH_3, the UE returns to step 805 to continuously monitor the Node B-estimated BS and the actual BS.

In step 815, the UE determines whether a value of the Node B-estimated BS is more than Threshold 4 (TH_4). TH_4 is a value used to determine whether a new BS is required to be reported when the actual BS of the UE is considered. TH_4 can be set in the same way as TH_2 in the first exemplary embodiment.

If the Node B-estimated BS value is more than TH_4 as a determination result in step 815, the UE proceeds to step 820 to report the BS. However, if the Node B-estimated BS value is less than or equal to TH_4, the UE returns to step 805 to continuously monitor the Node B-estimated BS and the actual BS. If both the condition of step 810 and the condition of step 815 are satisfied, it means that the actual BS of the UE will soon be 0, but the Node B estimates the BS value of the UE as a value of more than the actual BS value. Therefore, the UE reports a new BS and updates the Node B-estimated BS to the actual BS of the UE or a value approximating the actual BS of the UE in step 820.

A third exemplary embodiment corresponds to an operation of the UE when the first and second exemplary embodiments are used together. That is, in the third exemplary embodiment, a new BSR is transmitted at a point of time when the actual BS of the UE is close to 0 if the Node B-estimated BS value is more than the actual BS value, and a new BSR is transmitted at a point of time when the Node B-estimated BS value is close to 0 if the actual BS value is more than the Node B-estimated BS value.

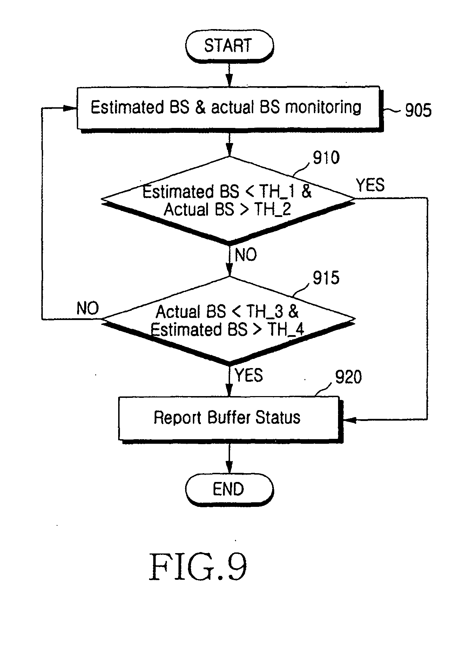

FIG. 9 is a flowchart illustrating an operation of the UE in accordance with the third exemplary embodiment of the present invention.

In step 905, the UE continuously monitors a Node B-estimated BS and an actual BS according to Equation (2).

In step 910, the UE determines whether a value of the Node B-estimated BS is less than TH_1 and a value of the actual BS is more than TH_2. If the above-described conditions are satisfied, the UE proceeds to step 920 to report the BS to a Node B. However, if the above-described conditions of step 910 are not satisfied, the UE proceeds to step 915 to determine whether the actual BS value is less than TH_3 and the Node B-estimated BS value is more than TH_4. If the above-described conditions of step 915 are satisfied, the UE proceeds to step 920 to report the BS. However, if the above-described conditions of step 915 are not satisfied, the UE returns to step 905 to continuously monitor the Node B-estimated BS and the actual BS.

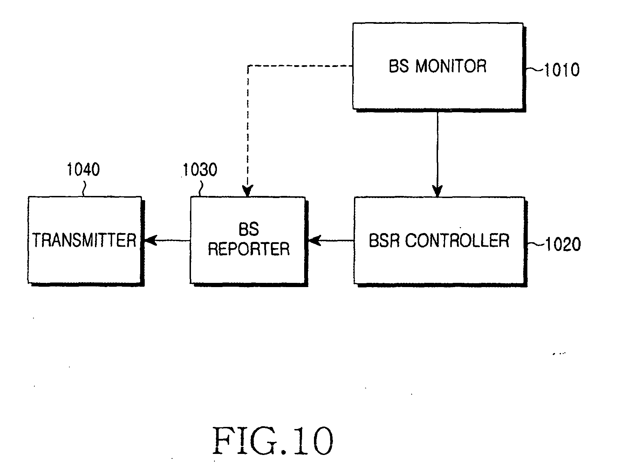

FIG. 10 illustrates a structure of the UE in accordance with the first through third exemplary embodiments of the present invention.

The UE transmits a BSR, generated from BS reporter 1030, to a Node B through a transmitter 1040. A BS monitor 1010 performs the function of monitoring an actual BS. A BSR controller 1020 controls the BSR transmission.

The BSR controller 1020 manages the transmitted BSR, the actual BS, and a BS that is estimated in the Node B on the basis of the amount of transmitted data. The BSR controller 1020 compares the Node B-estimated BS and the actual BS of the UE with at least two of threshold values TH_1, TH_2, TH_3, and TH_4, and sets a new BSR. When it is determined that the new BSR is required, the BSR controller 1020 commands the BS reporter 1030 to generate a new BSR.

Upon receiving the command of the BSR controller 1020, the BS reporter 1030 receives information about the actual BS from the BS monitor 1010, generates a BSR message, and transmits the BSR message to the Node B through the transmitter 1040.

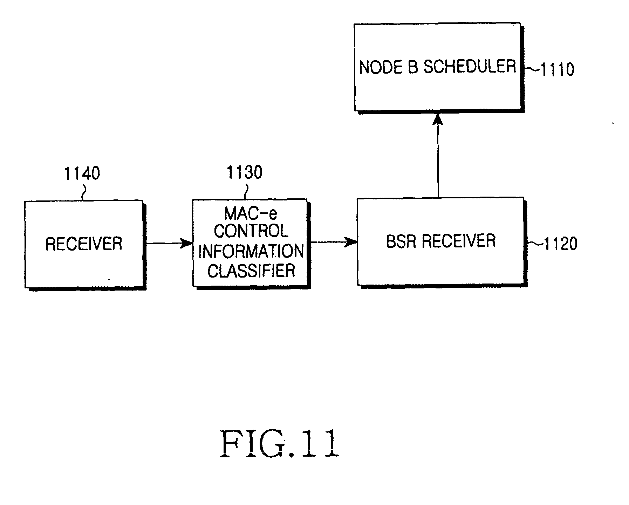

FIG. 11 illustrates a structure of the Node B in accordance with the first through third exemplary embodiments of the present invention.

A receiver 1140 of the Node B receives MAC-e control information comprising a BSR message transmitted from a UE, and transfers the received MAC-e control information to a MAC-e control information classifier 1130. The MAC-e control information classifier 1130 performs the function of disassembling the received MAC-e control information and transferring the disassembled information to a proper device. Specifically, the BSR message included in the received MAC-e control information is transferred to a BSR receiver 1120.

The BSR receiver 1120 transfers a BS based on the message to a Node B scheduler 1110. The Node B scheduler 1110 updates an estimated BS to the received BS. Subsequently, the Node B scheduler 1110 allocates transmission resources on the basis of the updated BS.

As is apparent from the above description, exemplary implementations of the present invention have the following effects.

The present invention can reduce inefficiency occurring due to an incorrect BSR and can reduce the unnecessary waste of transmission resources and the degradation of system performance.

While the present invention has been particularly shown and described with reference to certain exemplary embodiments thereof, it will be understood by those of ordinary skill in the art that various changes in form and detail may be made therein without departing from the scope of the present invention as defined by the appended claims and equivalents thereof.

**Claims**

1.  A method for reporting a Buffer Status BS using Node B-estimated BS information in a mobile communication system, the method comprising:

    monitoring (705) a Node B-estimated BS and monitoring an actual BS of a User Equipment UE;
    comparing (710) the Node B-estimated BS with a first threshold;
    determining (715) whether the actual BS is more than a second threshold if the Node B-estimated BS is less than the first threshold; and
    transmitting (720) a Buffer Status Report BSR indicative of the actual BS to a Node B if the actual BS is more than the second threshold,
    wherein the Node B-estimated BS is set equal to a value computed by subtracting an amount of data transmitted between a BS reporting time and a current time from a latest reported BS, and
    wherein the actual BS is set equal to the sum of data necessary to report the BS among data buffered in the UE.

2.  The method of claim 1, wherein the first threshold is a product of a current transmission rate of the UE and the sum of an estimated time required for BSR transmission and an arbitrary positive integer indicative of a margin.

3.  The method of claim 1, wherein the second threshold is set equal to the first threshold or is set greater than the first threshold.

4.  The method of claim 1, further comprising:

continuously monitoring the Node B-estimated BS and the actual BS when the Node B-estimated BS is greater than or equal to the first threshold or the actual BS is less than or equal to the second threshold.

5.  A method for reporting a Buffer Status BS using Node B-estimated BS information in a mobile communication system, the method comprising:

    monitoring (805) a Node B-estimated BS and monitoring an actual BS of a User Equipment UE;
    determining (810) whether the actual BS is less than a third threshold;
    comparing (815) the Node B-estimated BS with a fourth threshold if the actual BS is less than the third threshold; and
    transmitting (820) a Buffer Status Report BSR indicative of the actual BS to a Node B if the actual BS is more than the fourth threshold,
    wherein the Node B-estimated BS is set equal to a value computed by subtracting an amount of data transmitted between a BS reporting time and a current time from a latest reported BS, and
    wherein the actual BS is set equal to the sum of data necessary to report the BS among data buffered in the UE.

6.  The method of claim 5, wherein the third threshold is a product of a current transmission rate of the UE and the sum of an estimated time required for BSR transmission and an arbitrary positive integer indicative of a margin.

7.  The method of claim 5, wherein the fourth threshold is set equal to the third threshold or is set greater than the third threshold.

8.  The method of claim 5, further comprising:

    continuously monitoring the Node B-estimated BS and the actual BS when the actual BS is greater than or equal to the third threshold or the Node B-estimated BS is less than or equal to the fourth threshold.

9.  A method for reporting a Buffer Status BS using Node B-estimated BS information in a mobile communication system, the method comprising:

    monitoring (905) a Node B-estimated BS and monitoring an actual BS of a User Equipment UE;
    checking (910) a first condition that the Node B-estimated BS is less than a first threshold and the actual BS is more than a second threshold, in order to determine whether a new BS is required to be reported;
    checking (915) a second condition that the actual BS is less than a third threshold and the Node B-estimated BS is more than a fourth threshold; and
    transmitting (920) a Buffer Status Report BSR indicative of the actual BS to a Node B if at least one of the first and second conditions is satisfied,
    wherein the Node B-estimated BS is set equal to the value computed by subtracting an amount of data transmitted between a BS reporting time and a current time from a latest reported BS, and
    wherein the actual BS is set equal to the sum of data necessary to report the BS among data buffered in the UE.

10. The method of claim 9, wherein the first or third threshold is a product of a current transmission rate of the UE and the sum of an estimated time required for BSR transmission and an arbitrary positive integer indicative of a margin.

11. The method of claim 9, wherein the second or fourth threshold is set equal to the first threshold or is set greater than the first threshold.

12. The method of claim 9, further comprising:

    continuously monitoring the Node B-estimated BS and the actual BS when both the first and second conditions are not satisfied.

13. An apparatus for reporting a Buffer Status BS using Node B-estimated BS information in a mobile communication system, the apparatus comprising:

    a BS monitor (1010) adapted to monitor an actual BS of a User Equipment UE;
    a Buffer Status Report BSR controller (1020) adapted to monitor a Node B-estimated BS, compare the Node B-estimated BS and the actual BS with at least two thresholds, and determine whether a new BS is required to be reported;

a BS reporter (1030) adapted to receive information about the actual BS from the BS monitor when the BSR controller determines that the new BS is required to be reported, and generate a BSR message; and

a transmitter (1040) adapted to transmit the BSR message generated from the BS reporter to a Node B, wherein the Node B-estimated BS is set equal to a value computed by subtracting an amount of data transmitted between a BS reporting time and a current time from a latest reported BS, and

wherein the actual BS is set equal to the sum of data necessary to report the BS among data buffered in the UE.

14. The apparatus of claim 13, wherein the BSR controller is adapted to set an operation for transmitting a BSR indicative of the actual BS to the Node B when the Node B-estimated BS is less than a first threshold and the actual BS is more than a second threshold.

15. The apparatus of claim 13, wherein the BSR controller is adapted to set an operation for transmitting a BSR indicative of the actual BS to the Node B when the actual BS is less than a first threshold and the Node B-estimated BS is more than a second threshold.

16. The apparatus of claim 13, wherein the BSR controller is adapted to check a first condition that the Node B-estimated BS is less than a first threshold and the actual BS is more than a second threshold, in order to determine whether the new BS is required to be reported,

is adapted to check a second condition that the actual BS is less than a third threshold and the Node B-estimated BS is more than a fourth threshold, and

is adapted to set an operation for transmitting a BSR indicative of the actual BS to the Node B if at least one of the first and second conditions is satisfied.

17. The apparatus of claim 15, wherein at least one of the first and third threshold is a product of a current transmission rate of the UE and the sum of an estimated time required for BSR transmission and an arbitrary positive integer indicative of a margin.

18. The apparatus of claims 15, wherein at least one of the second and fourth threshold is set equal to the first or third threshold or is set to an arbitrary value greater than the first or third threshold.

**Patentansprüche**

1. Verfahren zum Berichten eines Buffer (Zwischenspeicher) Status BS unter Verwendung von Node B -geschätzter BS Information in einem Mobilkommunikationssystem, wobei das Verfahren umfasst:

Überwachen (705) eines Node B -geschätzten BS und Überwachen eines effektiven BS einer Benutzervorrichtung UE;

Vergleichen (710) des Node B -geschätzten BS mit einem ersten Schwellwert;

Bestimmen (715), ob der effektive BS mehr ist als ein zweiter Schwellwert, wenn der Node B -geschätzte BS kleiner ist als der erste Schwellwert; und

Senden (720) eines Buffer Status Berichtes BSR (BSR: buffer status report) bezeichnend für den effektiven BS an einen Node B, wenn der effektive BS mehr ist als der zweite Schwellwert,

wobei der Node B geschätzte BS einem Wert gleichgesetzt ist, der durch Abziehen einer Datenmenge, die zwischen einer BS Berichtszeit und einer aktuellen Zeit übertragen wurde, von einem zuletzt berichteten BS errechnet wird, und

wobei der effektive BS der Summe an Daten gleichgesetzt ist, die benötigt wird, den BS unter im UE zwischengespeicherten Daten zu berichten.

2. Verfahren nach Anspruch 1, wobei der erste Schwellwert das Produkt einer aktuellen Übertragungsrate des UE und der Summe einer geschätzten Zeit, die zur BSR Übertragung benötigt wird, und einer beliebigen positiven Ganzzahl, die indikativ für eine Toleranz ist, ist.

3. Verfahren nach Anspruch 1, wobei der zweite Schwellwert dem ersten Schwellwert gleichgesetzt ist oder größer gesetzt ist als der erste Schwellwert.

4. Verfahren nach Anspruch 1, ferner umfassend:

kontinuierliches Überwachen des Node B -geschätzten BS und des effektiven BS, wenn der Node B -geschätzte BS größer oder gleich dem ersten Schwellwert ist oder der effektive BS kleiner oder gleich dem zweiten Schwellwert ist.

5. Verfahren zum Berichten eines Buffer Status BS unter Verwendung von Node B - geschätzter BS Information in einem Mobilkommunikationssystem, wobei das Verfahren umfasst:

Überwachen (805) eines Node B -geschätzten BS und Überwachen eines effektiven BS einer Benutzervorrichtung UE;

Bestimmen (810), ob der effektive BS kleiner ist als ein dritter Schwellwert;

Vergleichen (815) des Node B -geschätzten BS mit einem vierten Schwellwert, wenn der effektive BS kleiner ist als der dritte Schwellwert; und

Senden (820) eines Buffer Status Berichtes BSR bezeichnend für den effektiven BS an einen Node B, wenn der effektive BS mehr ist als der vierte Schwellwert,

wobei der Node B -geschätzte BS einem Wert gleichgesetzt ist, der durch Abziehen einer Datenmenge, die zwischen einer BS Berichtszeit und einer aktuellen Zeit übertragen wurde, von einem zuletzt berichteten BS errechnet wird, und

wobei der effektive BS der Summe an Daten gleichgesetzt ist, die benötigt wird, um den BS unter im UE zwischengespeicherten Daten zu berichten.

6. Verfahren nach Anspruch 5, wobei der dritte Schwellwert ein Produkt einer aktuellen Übertragungsrate des UE und der Summe einer geschätzten Zeit, die zur BSR Übertragung benötigt wird, und einer beliebigen positiven Ganzzahl, die indikativ für eine Toleranz ist, ist.

7. Verfahren nach Anspruch 5, wobei der vierte Schwellwert dem dritten Schwellwert gleichgesetzt ist oder größer als der dritte Schwellwert gesetzt ist.

8. Verfahren nach Anspruch 5, ferner umfassend:

kontinuierliches Überwachen des Node B -geschätzten BS und des effektiven BS, wenn der effektive BS größer oder gleich dem dritten Schwellwert ist oder der Node B - geschätzte BS kleiner oder gleich dem vierten Schwellwert ist.

9. Verfahren zum Berichten eines Buffer Status BS unter Verwendung von Node B - geschätzter BS Information in einem Mobilkommunikationssystem, wobei das Verfahren umfasst:

Überwachen (905) eines Node B -geschätzten BS und Überwachen eines effektiven BS einer Benutzervorrichtung UE;

Prüfen (910) einer ersten Bedingung, dass der Node B -geschätzte BS kleiner ist als ein erster Schwellwert und der effektive BS mehr ist als ein zweiter Schwellwert, um zu bestimmen, ob es erforderlich ist, einen neuen BS zu berichten;

Prüfen (915) einer zweiten Bedingung, dass der effektive BS kleiner ist als ein dritter Schwellwert und der Node B -geschätzte BS mehr ist als ein vierter Schwellwert; und

Senden (920) eines Buffer Status Berichts BSR bezeichnend für den effektiven BS an einen Node B, wenn mindestens eine der ersten oder zweiten Bedingungen erfüllt ist,

wobei der Node B -geschätzte BS einem Wert gleichgesetzt ist, der durch Abziehen einer Datenmenge, die zwischen einer BS Berichtszeit und einer aktuellen Zeit übertragen wurde, von einem zuletzt berichteten BS errechnet wird, und

wobei der effektive BS der Summe an Daten gleichgesetzt ist, die benötigt wird, um den BS unter im UE zwischengespeicherten Daten zu berichten.

10. Verfahren nach Anspruch 9, wobei der erste oder dritte Schwellwert ein Produkt einer aktuellen Übertragungsrate des UE und der Summe einer geschätzten Zeit, die zur BSR Übertragung benötigt wird, und einer beliebigen positiven Ganzzahl, die eine Toleranz bezeichnet, ist.

11. Verfahren nach Anspruch 9, wobei der zweite oder vierte Schwellwert dem ersten Schwellwert gleichgesetzt ist oder größer als der erste Schwellwert gesetzt ist.

**12.** Verfahren nach Anspruch 9, ferner umfassend:

kontinuierliches Überwachen des Node B-geschätzen BS und des effektiven BS, wenn sowohl die erste als auch die zweite Bedingung nicht erfüllt sind.

**13.** Vorrichtung zum Berichten eines Buffer Status BS unter Verwendung von Node B - geschätzter BS Information in einem Mobilkommunikationssystem, wobei die Vorrichtung umfasst:

einen BS Monitor (1010), geeignet einen effektiven BS einer Benutzervorrichtung UE zu überwachen; eine Buffer Status Bericht BSR Steuereinheit (1020), geeignet zum Überwachen eines Node B -geschätzten BS, zum Vergleichen des Node B -geschätzten BS und des effektiven BS mit mindestens zwei Schwellwerten, und zum Bestimmen, ob es erforderlich ist, einen neuen BS zu berichten; einen BS Berichterstatter (1030), geeignet zum Empfangen von Information über den effektiven BS vom BS Monitor, wenn die BSR Steuereinheit bestimmt, dass es erforderlich ist, den neuen BS zu berichten, und zum Erzeugen einer BSR Nachricht; und einen Sender (1040), geeignet zum Senden der BSR Nachricht, die von dem BS Berichterstatter erzeugt wurde, an einen Node B, wobei der Node B -geschätzte BS einem Wert gleichgesetzt ist, der durch Abziehen einer Datenmenge, die zwischen einer BS Berichtszeit und einer aktuellen Zeit übertragen wurde, von einem zuletzt berichteten BS errechnet wird, und wobei der effektive BS der Summe an Daten gleichgesetzt ist, die benötigt wird, um den BS unter im UE zwischengespeicherten Daten zu berichten.

**14.** Vorrichtung nach Anspruch 13, wobei die BSR Steuereinheit angepasst ist, einen Vorgang einzurichten zum Senden eines BSR, der den effektiven BS bezeichnet, an den Node B, wenn der Node B -geschätzte BS kleiner ist als ein erster Schwellwert und der effektive BS mehr ist als ein zweiter Schwellwert.

**15.** Vorrichtung nach Anspruch 13, wobei die BSR Steuereinheit eingerichtet ist, einen Vorgang einzurichten zum Senden eines BSR, der den effektiven BS bezeichnet, an den Node B, wenn der effektive BS kleiner ist als ein erster Schwellwert und der Node B -geschätzte BS mehr ist als ein zweiter Schwellwert.

**16.** Vorrichtung nach Anspruch 13, wobei die BSR Steuereinheit
eingerichtet ist, eine erste Bedingung zu prüfen, dass der Node B -geschätzte BS kleiner ist als ein erster Schwellwert und der effektive BS mehr ist als ein zweiter Schwellwert, um zu bestimmen, ob es erforderlich ist, den neuen BS zu berichten,
eingerichtet ist, eine zweite Bedingung zu prüfen, dass der effektive BS kleiner ist als ein dritter Schwellwert und der Node B -geschätzte BS mehr ist als ein vierter Schwellwert, und
eingerichtet ist, einen Vorgang einzurichten zum Senden eines BSR, der den effektiven BS bezeichnet, an den Node B, wenn zumindest eine der ersten oder zweiten Bedingungen erfüllt ist.

**17.** Vorrichtung nach Anspruch 15, wobei mindestens der erste oder zweite Schwellwert ein Produkt ist einer aktuellen Übertragungsrate des UE und der Summe einer geschätzten Zeit, die zur BSR Übertragung benötigt wird, und einer beliebigen positiven Ganzzahl, die eine Toleranz bezeichnet.

**18.** Vorrichtung nach Anspruch 15, wobei mindestens der zweite oder vierte Schwellwert dem ersten oder dritten Schwellwert gleichgesetzt ist, oder auf einen beliebigen Wert größer als der erste oder dritte Schwellwert gesetzt ist.

**Revendications**

**1.** Procédé pour rapporter un état de tampon (BS pour Buffer Status) en utilisant une information BS estimée au noeud B dans un système de communication mobile, le procédé comprenant les étapes qui consistent à :

surveiller (705) un BS estimé au noeud B et surveiller un BS effectif d'un équipement d'utilisateur (UE pour User Equipment) ;
comparer (710) le BS estimé au noeud B avec un premier seuil ;
déterminer (715) si le BS effectif est supérieur à un deuxième seuil si le BS estimé au noeud B est inférieur au premier seuil ; et

transmettre (720) un rapport d'état de tampon (BSR pour Buffer Status Report) indicatif du BS effectif à un noeud B si le BS effectif est supérieur au deuxième seuil ;

dans lequel le BS estimé au noeud B est réglé égal à une valeur calculée en soustrayant une quantité de données transmise entre un temps de rapport de BS et un temps actuel à partir d'un BS rapporté en dernier ; et dans lequel le BS effectif est réglé égal à la somme des données nécessaires pour rapporter le BS parmi des données stockées dans l'UE.

**2.** Procédé selon la revendication 1, dans lequel le premier seuil est un produit d'un débit de transmission actuel de l'UE et de la somme d'un temps estimé exigé pour la transmission du BSR et d'un entier positif arbitraire indicatif d'une marge.

**3.** Procédé selon la revendication 1, dans lequel le deuxième seuil est réglé égal au premier seuil ou est réglé supérieur au premier seuil.

**4.** Procédé selon la revendication 1, comprenant de plus l'étape qui consiste à :

surveiller en continu le BS estimé au noeud B et le BS effectif lorsque le BS estimé au noeud B est supérieur ou égal au premier seuil ou le BS effectif est inférieur ou égal au deuxième seuil.

**5.** Procédé pour rapporter un état de tampon BS en utilisant une information BS estimée au noeud B dans un système de communication mobile, le procédé comprenant les étapes qui consistent à :

surveiller (805) un BS estimé au noeud B et surveiller un BS effectif d'un équipement d'utilisateur UE ;
déterminer (810) si le BS effectif est inférieur à un troisième seuil ;
comparer (815) le BS estimé au noeud B avec un quatrième seuil si le BS effectif est inférieur au troisième seuil ; et
transmettre (820) un rapport d'état de tampon BSR indicatif du BS effectif à un noeud B si le BS effectif est supérieur au quatrième seuil ;
dans lequel le BS estimé au noeud B est réglé égal à une valeur calculée en soustrayant une quantité de données transmise entre un temps de rapport de BS et un temps actuel à partir d'un BS rapporté en dernier ; et
dans lequel le BS effectif est réglé égal à la somme des données nécessaires pour rapporter le BS parmi des données stockées dans l'UE.

**6.** Procédé selon la revendication 5, dans lequel le troisième seuil est un produit d'un débit de transmission actuel de l'UE et de la somme d'un temps estimé exigé pour la transmission du BSR et d'un entier positif arbitraire indicatif d'une marge.

**7.** Procédé selon la revendication 5, dans lequel le quatrième seuil est réglé égal au troisième seuil ou est réglé supérieur au troisième seuil.

**8.** Procédé selon la revendication 5, comprenant de plus l'étape qui consiste à :

surveiller en continu le BS estimé au noeud B et le BS effectif lorsque le BS effectif est supérieur ou égal au troisième seuil ou le BS estimé au noeud B est inférieur ou égal au quatrième seuil.

**9.** Procédé pour rapporter un état de tampon BS en utilisant une information BS estimée au noeud B dans un système de communication mobile, le procédé comprenant les étapes qui consistent à :

surveiller (905) un BS estimé au noeud B et surveiller un BS effectif d'un équipement d'utilisateur UE ;
contrôler (910) une première condition que le BS estimé au noeud B est inférieur à un premier seuil et que le BS effectif est supérieur à un deuxième seuil de façon à déterminer si un nouveau BS a besoin d'être rapporté ;
contrôler (915) une deuxième condition que le BS effectif est inférieur à un troisième seuil et que le BS estimé au noeud B est supérieur à un quatrième seuil ; et
transmettre (920) un rapport d'état de tampon BSR indicatif du BS effectif à un noeud B si au moins une des première et deuxième conditions est satisfaite ;
dans lequel le BS estimé au noeud B est réglé égal à la valeur calculée en soustrayant une quantité de données transmise entre un temps de rapport de BS et un temps actuel à partir d'un BS rapporté en dernier ; et
dans lequel le BS effectif est réglé égal à la somme des données nécessaires pour rapporter le BS parmi des données stockées dans l'UE.

**10.** Procédé selon la revendication 9, dans lequel le premier ou troisième seuil est un produit d'un débit de transmission actuel de l'UE et de la somme d'un temps estimé exigé pour la transmission du BSR et d'un entier positif arbitraire indicatif d'une marge.

**11.** Procédé selon la revendication 9, dans lequel le deuxième ou quatrième seuil est réglé égal au premier seuil ou est réglé supérieur au premier seuil.

**12.** Procédé selon la revendication 9, comprenant de plus l'étape qui consiste à :

surveiller en continu le BS estimé au noeud B et le BS effectif lorsque les première et deuxième conditions ne sont pas satisfaites.

**13.** Appareil pour rapporter un état de tampon BS en utilisant une information BS estimée au noeud B dans un système de communication mobile, l'appareil comprenant :

un moniteur de BS (1010) adapté pour surveiller un BS effectif d'un équipement d'utilisateur UE ;
un contrôleur de rapport d'état de tampon BSR (1020) adapté pour surveiller un BS estimé au noeud B, comparer le BS estimé au noeud B et le BS effectif avec au moins deux seuils et déterminer si un nouveau BS a besoin d'être rapporté ;
un rapporteur de BS (1030) adapté pour recevoir de l'information sur le BS effectif à partir du moniteur de BS lorsque le contrôleur BSR détermine que le nouveau BS a besoin d'être rapporté, et générer un message BSR ; et
un émetteur (1040) adapté pour envoyer le message BSR généré par le rapporteur de BS à un noeud B ;
dans lequel le BS estimé au noeud B est réglé égal à une valeur calculée en soustrayant une quantité de données transmise entre un temps de rapport de BS et un temps actuel à partir d'un BS rapporté en dernier ; et
dans lequel le BS effectif est réglé égal à la somme des données nécessaires pour rapporter le BS parmi des données stockées dans l'UE.

**14.** Appareil selon la revendication 13, dans lequel le contrôleur BSR est adapté pour régler une opération pour envoyer un BSR indicatif du BS effectif au noeud B lorsque le BS estimé au noeud B est inférieur à un premier seuil et le BS effectif est supérieur à un deuxième seuil.

**15.** Appareil selon la revendication 13, dans lequel le contrôleur BSR est adapté pour régler une opération pour envoyer un BSR indicatif du BS effectif au noeud B lorsque le BS effectif est inférieur à un premier seuil et le BS estimé au noeud B est supérieur à un deuxième seuil.

**16.** Appareil selon la revendication 13, dans lequel le contrôleur BSR est adapté pour contrôler une première condition que le BS estimé au noeud B est inférieur à un premier seuil et le BS effectif est supérieur à un deuxième seuil de façon à déterminer si le nouveau BS a besoin d'être rapporté ;

est adapté pour contrôler une deuxième condition que le BS effectif est inférieur à un troisième seuil et le BS estimé au noeud B est supérieur à un quatrième seuil ; et
est adapté pour régler une opération pour transmettre un BSR indicatif du BS effectif au noeud B si au moins une des première et deuxième conditions est satisfaite.

**17.** Appareil selon la revendication 15, dans lequel au moins un des premier et troisième seuils est un produit d'un débit de transmission actuel de l'UE et de la somme d'un temps estimé exigé pour la transmission du BSR et d'un entier positif arbitraire indicatif d'une marge.

**18.** Appareil selon la revendication 15, dans lequel au moins un des deuxième et quatrième seuils est réglé égal au premier ou troisième seuil ou est réglé à une valeur arbitraire supérieure au premier ou troisième seuil.

(a) Node B-controlled scheduling is not used

# FIG.1A

(b) Node B-controlled scheduling is used

# FIG.1B

FIG.2

FIG.3

FIG.4

FIG.5

605
UE

610
Node B

Actual BS
= 100 KB

615

620
Reported BS =50 KB

625
AG = x

UE manages estimated BS
Estimated BS = latest
reported BS − amount of
transmitted data

630
MAC-e PDU

635

640

645
Reported BS = Y KB

UE reports BS before esti-
mated BS becomes zero

FIG.6

START

Estimated BS & actual BS monitoring — 705

NO ← Estimated BS < TH_1 — 710

YES

NO ← actual BS > TH_2 — 715

YES

Report Buffer Status — 720

END

FIG.7

START

Estimated BS & actual BS monitoring — 805

actual BS < TH_3 — 810

NO

YES

Estimated BS > TH_4 — 815

NO

YES

Report Buffer Status — 820

END

FIG.8

START

Estimated BS & actual BS monitoring ~ 905

910

Estimated BS < TH_1 &
Actual BS > TH_2 —— YES

NO

915

NO —— Actual BS < TH_3 &
Estimated BS > TH_4

YES

920

Report Buffer Status

END

FIG.9

BS MONITOR ~1010

1040        1030

TRANSMITTER ← BS REPORTER ← BSR CONTROLLER ~1020

FIG.10

NODE B SCHEDULER ~1110

1140

1130

RECEIVER

MAC-e
CONTROL
INFORMATION
CLASSIFIER

BSR RECEIVER ~1120

FIG.11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1509011 A2